Europäisches Patentamt

(19) European Patent Office

Office européen des brevets

(11) Publication number: **0 069 522**
**A1**

# (12) EUROPEAN PATENT APPLICATION

(21) Application number: 82303387.3

(51) Int. Cl.³: **G 09 B 19/00**

(22) Date of filing: 28.06.82

(30) Priority: 26.06.81 GB 8119845

(43) Date of publication of application:
12.01.83 Bulletin 83/2

(84) Designated Contracting States:
AT BE CH DE FR GB IT LI LU NL SE

(71) Applicant: RESEARCH MACHINES LIMITED
P.O. Box 75 Mill Street
Oxford, OX2 OBW(GB)

(72) Inventor: Benzie, David
15 St. Mary Haye Road
Tavistock Devon PL19 8LR(GB)

(74) Representative: Warren, Anthony Robert et al,
BARON & WARREN 18 South End Kensington
London W8 5BU(GB)

(54) Educational aid for teaching computer programming.

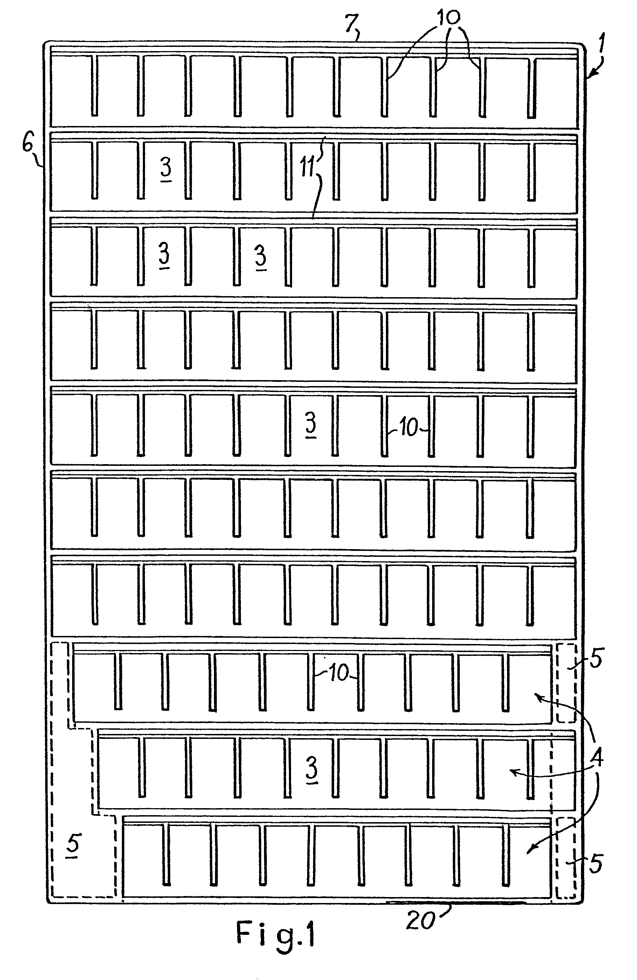

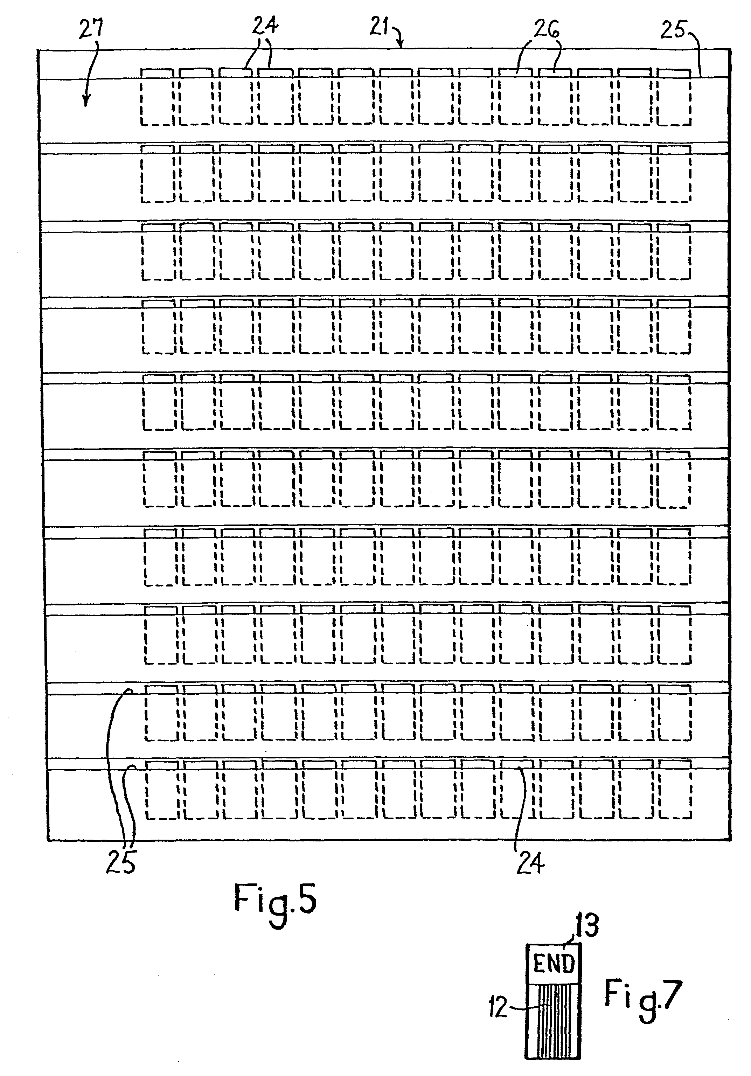

(57) An educational aid for use in teaching computer pro-
gramming comprises a tray (1-Fig. 1) having rows of
compartments (3), each adapted to contain a supply of
identical labels having thereon a visible binary code in the
form of a bar code. The compartments (3) in the rows (4) at
one end of the tray (1) are disposed in an array corresponding to the keyboard of a typical keyboard input terminal for
containing binary coded labels representing the characters
and symbols of a keyboard in a similar sequence. The aid
also includes a coding board (27-Fig. 5) having a multiplicity
of rows of pockets (24) for holding individual binary coded
labels selected from the tray (1) and disposed in the pockets
(24) in a required sequence to produce a computer program.
Each pocket (24) has a window (25) at its front face through
which a coded label inserted into the pocket (24) can be read
by a scanning device.

EP 0 069 522 A1

./...

Fig.1

Fig.5

# EDUCATIONAL AID FOR TEACHING COMPUTER PROGRAMMING

The present invention relates to an educational aid for use in teaching computer programming to students and, more particularly, to such an aid for use in initiating younger students into the techniques of computer programming.

The present invention consists in an educational aid for use in teaching computer programming, comprising, in combination, a tray having a multiplicity of rows of compartments, each adapted to contain a supply of identical labels having thereon a visible binary code, at least some of the rows of compartments at one end of the tray being disposed in an array corresponding to the keyboard of a typical keyboard input terminal for containing binary coded labels representing the characters and symbols of a keyboard in a similar sequence, and a coding board having a multiplicity of rows of pockets for holding individual binary coded labels selected from the tray and disposed in the pockets in a required sequence to produce a computer program, each pocket having a window at its front face through which a coded label inserted into the pocket can be read by a scanning device. The binary code used on the labels is preferably of the kind commonly referred to as a bar code.

With the invention, a student may compile a computer program by simply selecting appropriate labels from the tray and disposing them in a desired sequence along the rows of pockets in the coding board. The resulting program may be entered into a suitable computer by scanning the labels in the pockets in the appropriate sequence with a manual light-reader which reads the binary codes on the labels in the pockets and feeds corresponding binary signals into the computer.

Conveniently, each compartment of the tray is labelled with a human-readable keyword, character or symbol identifying the coded labels intended to be contained in the compartments. For example, it may have a zone in a readily visible position on one of its walls adapted to receive an adhesive paper strip displaying the keyword or character. Each label preferably has the corresponding human-readable keyword or character printed on it to identify the label. The labels and the compartments, or labelling strips attached to the compartments, may be colour coded to facilitate selection and replacement of labels.

The tray may have a cover or lid which fits over the tray to close the compartments. This lid is preferably provided on its inside with means which, when the lid is fitted on to the tray, prevents the coded labels from being inadvertently dislodged from their correct compartments and becoming mixed.

The invention also consists in a tray or coding board for use in the educational aid according to the invention.

In order that the invention may be more readily understood, reference will now be made to the accompanying drawings, in which:-

Figs. 1 and 2 respectively illustrate a plan view and a longitudinal sectional view of a tray according to the invention,

Figs. 3 and 4 respectively illustrate an underneath plan and a side elevation of a lid for the tray shown in Figs. 1 and 2,

Figs. 5 and 6 respectively illustrate a plan view and a longitudinal sectional view of a coding board according to the invention and,

Fig. 7 illustrates a sample label for use with the invention.

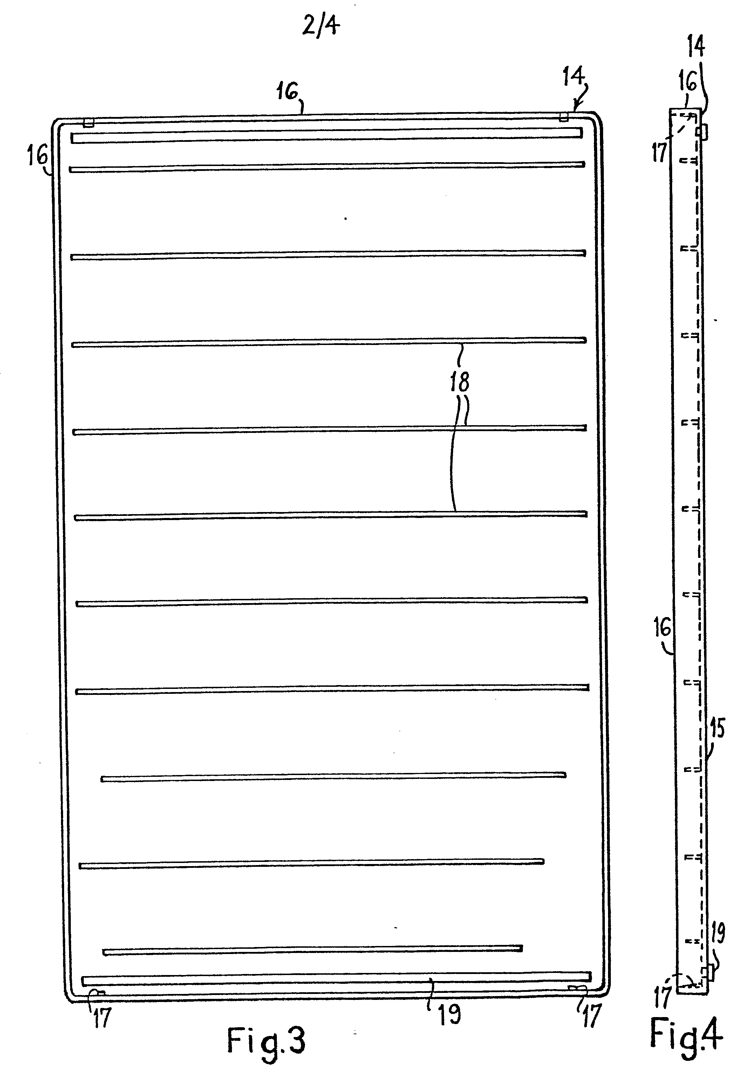

Referring to Figs. 1 and 2 of the drawings, the tray 1 is of rectangular shape in plan and comprises a plurality of rows of identical compartments 3 extending width-wise of the tray. Apart from three rows 4 of compartments at one end of the tray, the rows extend across the full width of the tray. The three rows 4 at said one end of the tray are arranged in an array corresponding to the keyboard of a typical keyboard input terminal for a computer and are intended to contain coded labels representing the letters and numbers of a typical keyboard, for example, a QWERTY keyboard, in an identical sequence. The three rows 4 have less numbers of compartments than the other rows and the tray has lands 5 at the ends of these rows to compensate for the reduced numbers of compartments.

As shown more particularly in Fig. 2, the tray comprises side and end walls 6,7 enclosing a central portion of corrugated configuration. The corrugations 8,9 extend parallel to the end walls 7. The upwardly projecting corrugations 8 are of V-shaped section whilst the downwardly projecting corrugations or troughs 9, which contain the compartments 3, are of frusto V-shape section. The troughs 9 are divided into the individual compartments 3 by partitions 10 extending longitudinally of the tray and part-way up the height of the troughs. Except for the three rows 4, the partitions 10 are aligned in columns. The marginal zones along the top front faces of the corrugations 8 are formed with shallow rebates 11 for receiving self-adhesive strips displaying human-readable keywords, characters or symbols identifying the coded labels to be inserted in the individual compartments.

In use, each of the compartments contains a supply of identical labels having printed thereon a visible binary code, such as a bar code, representing a selected computer keyword, character or symbol. A sample label, which is preferably formed from anti-static material, is illustrated in Fig. 7. A bar code is printed at 12 and the corresponding human-readable keyword is printed in the zone 13. The zone 13 may also be coloured in accordance with a colour coding used on the identifying strips attached to the rebates 11 of the compartments to facilitate selection and replacement of labels in the compartments. The labels may be supplied in perforated sheets so that individual labels can readily be separated and lodged in the appropriate compartments of the tray. They are stacked one behind the other in their compartments and normally rest face downwards against the front walls of the compartments so that the keywords etc. displayed along the rebates 11 are visible.

Figs. 3 and 4 illustrate the lid 14 for the tray 1. It is of rectangular shape in plan and comprises a top 15 and downwardly projecting side and end flanges 16. Small tapered ribs 17 are formed on the insides of the end flanges and engage with the outsides of the end walls 7 of the tray, which may also taper slightly inwards, when the lid is fitted onto the tray so as to provide an interference fit between the lid and tray for retaining the lid in position. Projecting downwardly from the top of the lid in positions corresponding to the troughs 9 of the tray are a plurality of webs 18. These webs extend parallel to the end flanges of the lid and terminate short of the side walls 6 and lands 5 of the tray so that when the lid is fitted onto the tray, the top 15 of the lid engages the walls 6,7 and lands 5 of the tray and the bottom edges of the webs 18 substantially engage the tops of the tray partitions 10. These webs 18 cooperate with the partitions 10 to prevent the labels from inadvertently being dislodged from their correct compartments and becoming mixed when the closed tray is handled. Hollow ribs 19 extending width-wise of the lid are formed on the outside of the lid top 15 adjacent opposite ends. In a stack of closed trays, these ribs engage the insides of the end walls 7 of the next tray above to stabilise the stack. When the tray is in use, the lid is fitted to the underneath of the tray, to avoid it being mislaid or causing a nuisance, and serves as a base for the tray. A shallow recess (not shown) may be formed on the outside of the lid top for receiving an adhesive label identifying the contents of the closed tray and a shallow recess 20 (Fig. 1) for a similar purpose may also be formed on one end wall of the tray. The tray 1 and the lid 14 may be produced as plastics mouldings.

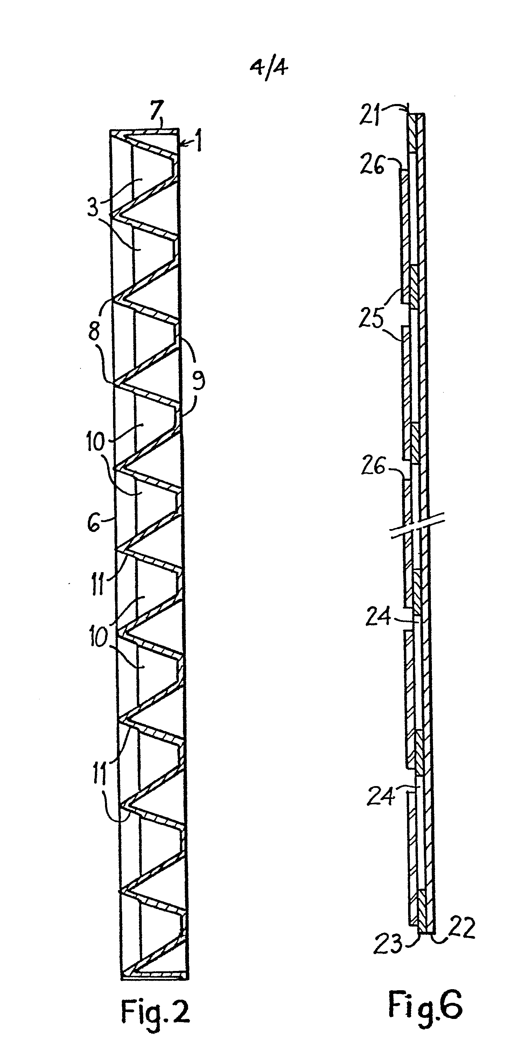

The coding board 21 illustrated in Figs. 5 and 6 is of laminated construction and may be produced from plastics laminations. It is of rectangular shape in plan and comprises a base card or layer 22, a collator layer 23 superimposed on and bonded to the base layer and defining a plurality of rows of rectangular openings 24 of sufficient size to contain coded labels selected from the tray 1, and a plurality of transparent strips 25 fastened to the front face of the collator layer 23 in positions over the rows of openings. The strips 25 are disposed with their top edges spaced a short distance below the top edges of the openings 24 in the collator layer so as to provide gaps 26 through which the coded labels can be inserted into the flat pockets defined between the strips and the openings in the collator layer. The strips are secured in position by bonding along bottom and end margins of the strips.

When labels are inserted into the pockets, they fit snugly in the pockets with the zones 13 (Fig. 7) projecting from the gaps 26 onto the surfaces of the transparent strips 25, or the top end land portion of the collator layer, immediately above the pockets. This facilitates removal of the labels from the pockets.

-6-

The pockets are offset towards the right-hand side of the board 21, as viewed in Fig. 5, to provide a wider substantially flat marginal zone 27 on the left-hand side of the board. When scanning the labels placed in the pockets, a light reader is moved from left to right along the rows and the wide left-hand marginal zone 27 provides an acceleration zone of satisfactory width to permit the light reader to be accelerated to an appropriate speed to achieve correct reading of the bar codes before scanning the first label in each row.

In order to produce a program, the required labels are selected from the compartments 3 in the tray 1 and are inserted into the pockets in the coding board 21 in a required sequence and along successive rows of the board. The program thereby compiled can be entered into a suitable computer by successively scanning the labels in the rows, through the transparent strips 25, with a hand-held light reader which reads the bar codes on the labels and supplies corresponding binary data to the computer. The reader is traversed along successive rows in contact with the strips 25 which provide flat transparent surfaces for scanning purposes. When the program has been entered in the computer, the labels may be removed from the coding board 21 and be replaced in their appropriate compartments in the tray and another program may be compiled and entered into the computer in a similar manner.

Whilst a particular embodiment has been described, it will be understood that modifications can be made without departing from the scope of the invention. For example, a transparent layer having slots cut or stamped in positions corresponding to the gaps 26 may be adhered to the collator layer 23 in place of the strips 25 in order to form the pockets in the coding board.

0069522

-7-

CLAIMS

1.    An educational aid for use in teaching computer programming, characterised in that it comprises, in combination, a tray (1) having a multiplicity of rows of compartments (3), each adapted to contain  a supply of identical labels (Fig. 7) having thereon a visible binary code (12), at least some of the rows (4) of compartments (3) at one end of the tray being disposed in an array corresponding to the keyboard of a typical input terminal for containing binary coded labels representing the characters and symbols of a keyboard in a similar sequence, and a coding board (21) having a multiplicity of rows of pockets (24) for holding individual binary coded labels selected from the tray (1) and disposed in the pockets in a required sequence to produce a computer program, each pocket (24) having a window (25) at its front face through which  a coded label inserted into the pocket can be read by a scanning device.

2.    An educational aid as claimed in claim 1, wherein the binary code (12) used on the labels (Fig. 7) is a bar code.

3.    An educational aid as claimed in claim 1 or 2, wherein each compartment (3) of the tray (1) is labelled, or adapted to be labelled, with a human-readable keyword, character or symbol identifying the coded labels intended to be contained in the compartments.

4.    An educational aid as claimed in claim 3, wherein each compartment (3) has a zone (11) in a readily visible position on one of its walls adapted to receive an adhesive paper strip displaying the keyword or character.

5.    An educational aid as claimed in any preceding claim, wherein each label (Fig. 7) has the corresponding human-readable keyword or character printed on it to identify the label, the labels and the compartments (3) also being colour coded to facilitate selection and replacement of labels.

6.    An educational aid as claimed in any preceding claim, wherein the tray (1) has a lid (14) which fits over the tray to close the compartments, the lid being provided on its inside with means (18) which, when the lid is fitted on to the tray, prevents the coded labels from being inadvertently dislodged from their correct compartments and becoming mixed.

7.    An educational aid as claimed in any preceding claim, wherein the coding board (21) includes a zone devoid of pockets at one end of the rows of pockets (24) to provide an acceleration zone to permit, in operation, the scanning device to be accelerated to a speed to achieve correct reading of the codes on the labels in the pockets in the rows before scanning the first label in each row.

8.    An educational aid as claimed in any preceding claim, wherein the tray (1) includes a central corrugated portion defining the rows of compartments (3), the corrugations being mutually parallel, and being defined by upwardly projecting, inverted generally V-shaped portions (8) and downwardly projecting generally frusto V-shaped portions (9), the troughs defined by the corrugation portions (8, 9) being divided into the individual compartments (3) by partitions (10) extending part-way up the height of the troughs.

Fig.1

0069522

Fig.3

Fig.4

Fig.5

Fig.7

Fig.2

Fig.6

**European Patent Office**

**EUROPEAN SEARCH REPORT**

Application number

EP 82 30 3387.3

## DOCUMENTS CONSIDERED TO BE RELEVANT

| Category | Citation of document with indication, where appropriate, of relevant passages | Relevant to claim |
|---|---|---|
| A | US – A – 4 176 474 (R. O'SULLIVAN) <br> * column 1, lines 37 to 43 * <br> -- | 1,3,5 |
| A | GB – A – 1 450 225 (C.A. TACEY) <br> * page 1, lines 19 to 37 * <br> -- | 1,3,5 |
| A | GB – A – 1 503 671 (J.H.M. MARTIN) <br> * page 1, lines 9 to 39 * <br> -- | |
| A | US – E – 28 763 (A. EPSTEIN) <br> * column 1, lines 39 to 65 * <br> ---- | |

**CLASSIFICATION OF THE APPLICATION (Int. Cl. 3)**

G 09 B 19/00

**TECHNICAL FIELDS SEARCHED (Int.Cl. 3)**

G 09 B 1/00

G 09 B 19/00

G 09 B 29/00

G 09 D 1/00

G 09 F 7/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 26-08-1982 | BOTTERILL |

EPO Form 1503.1 06.78